# FASCICULE DE BREVET EUROPEEN

(11) **EP 1 801 445 B1**
(45) Date de publication et mention de la délivrance du brevet: **02.09.2009**
(21) Numéro de dépôt: 06301216.5
(22) Date de dépôt: 05.12.2006
(51) Int. Cl.: F16D 25/08, F16D 25/12, F16D 13/75

(54) **Embrayage à friction commandé automatiquement**
Automatisch gesteuerte Reibungskupplung
Automatically controlled friction clutch

(30) Priorité: 23.12.2005 FR 0513251
(43) Date de publication de la demande: 27.06.2007
(73) Titulaire: Renault, 32100 Boulogne-Billancourt (FR)
(72) Inventeur: Chouchana, Richard, 92220, BAGNEUX (FR)
(74) Mandataire: Rougemont, Bernard

(56) Documents cités:
- EP-A- 1 557 581
- FR-A- 2 674 303
- FR-A- 2 802 593
- US-A- 4 081 065

## Description

L'invention concerne le domaine des embrayages à friction comportant un diaphragme, commandés de façon automatique, comme ceux par exemple utilisés avec les boîtes de vitesse robotisées. Un embrayage selon le préambule de la revendication 1 est connu de FR-A-2 802 593..

Dans un embrayage commandé automatiquement, tel que ceux utilisés avec une boîte de vitesses robotisée, l'embrayage est débrayé ou embrayé par un dispositif de commande de l'embrayage. Le dispositif de commande de l'embrayage est, par exemple, piloté par un calculateur de boîte de vitesse, de façon à asservir l'effort d'embrayage et la course de la butée d'embrayage. De façon connue, la butée d'embrayage est en appui sur les becs de diaphragme et la course de la butée d'embrayage détermine le couple transmissible par l'embrayage. D'autre part la course de la butée d'embrayage est déterminée par l'application d'un effort d'embrayage qui est la force motrice appliquée au diaphragme. Une loi non linéaire détermine le couple transmissible en fonction de la course de la butée d'embrayage et une loi non linéaire détermine la course de la butée d'embrayage en fonction de l'effort d'embrayage. L'intensité de la force à appliquer par un dispositif de commande automatique de l'embrayage est donc calculée selon ces deux lois. De plus un embrayage a des caractéristiques de transmission d'un mouvement de translation et d'une force d'appui qui lui sont propres.

Un problème technique consiste à appliquer une force de commande de l'embrayage en tenant compte des caractéristiques propres de l'embrayage, afin d'appliquer un effort d'embrayage déterminé. L'embrayage est, par exemple, commandé selon un effort minimum d'attaque au début du débrayage. D'autre part, la loi qui détermine la course de la butée d'embrayage en fonction de la commande appliquée à l'embrayage comporte, par exemple, une course morte à la fin du mouvement d'embrayage.

Une solution technique consiste à appliquer une commande à l'embrayage selon une cartographie de la course de butée en fonction de la commande d'embrayage. La commande d'embrayage hydraulique est, par exemple, une pression hydraulique fournie par un distributeur. Cependant, cette cartographie doit être établie pour chaque type d'embrayage, ce qui implique des études de chaque nouvel embrayage ou pour chaque modification apportée à un embrayage. Cette technique est donc chère. De plus cette technique n'est pas évolutive et ne tient donc pas compte de l'évolution des caractéristiques de l'embrayage ce qui implique une imprécision de l'effort d'embrayage appliqué.

La présente invention a donc pour objet de pallier un ou plusieurs inconvénients de l'art antérieur en créant un dispositif permettant de commander avec précision l'effort d'embrayage.

Cet objectif est atteint grâce à un embrayage selon la revendication 1.

Un deuxième but de l'invention est de commander avec précision la course de la butée d'embrayage.

Selon une autre particularité, l'embrayage comprend des moyens de mesure de la position relative d'au moins un premier indicateur de position solidaire de l'organe moteur par rapport à au moins un deuxième indicateur de position fixe en translation par rapport à l'arbre primaire, les moyens de mesure de la position relative transmettant, via des seconds moyens de communication, un signal image de la position relative au dispositif de calcul.

Selon une autre particularité, le capteur de pression est un capteur de pression annulaire .

Selon une autre particularité, le capteur de pression est de type piézoélectrique et est en liaison avec un premier boîtier d'alimentation et de mesure transformant un signal électrique analogique image de la pression produit par le capteur piézoélectrique en le signal transmis au dispositif de calcul, sous forme numérique.

Selon une autre particularité, ledit premier indicateur de position est un aimant et ledit deuxième indicateur de position est une bobine placée en vis-à-vis de l'aimant reliée aux moyens de mesure de la position relative par une liaison électrique les moyens de mesure de la position relative comprenant un deuxième boîtier d'alimentation et de mesure transmettant le signal image de la position relative au dispositif de calcul, sous forme numérique.

Selon une autre particularité, l'organe moteur étant un piston hydraulique, l'aimant est situé dans la partie mobile du piston et deux bobines d'induction sont enroulées autour d'un noyau ferreux, les deux bobines et le noyau ferreux étant insérés ou noyés dans le tube de support du piston.

Selon une autre particularité, ledit deuxième indicateur de position est un aimant et ledit premier indicateur de position est une bobine placée en vis-à-vis de l'aimant reliée aux moyens de mesure de la position relative par une liaison électrique les moyens de mesure de la position relative comprenant un deuxième boîtier d'alimentation et de mesure transmettant le signal image de la position relative au dispositif de calcul, sous forme numérique.

Selon une autre particularité, l'organe moteur étant un piston annulaire hydraulique coulissant sur un tube, l'aimant est situé dans le tube de support du piston, ladite bobine étant comprise dans la partie annulaire du piston.

Un autre but de l'invention est d'associer l'embrayage automatique à un dispositif palliant le phénomène de crissement de butée.

Selon une autre particularité, une partie du mécanisme de commande comprend un roulement rendu solidaire par sa bague extérieure des becs de diaphragme, la bague intérieure du roulement étant solidaire en rotation d'un manchon synchronisateur coaxial à l'arbre primaire du moteur, le manchon étant monté sur la bague intérieure par des moyens permettant un déplacement radial relatif du manchon par rapport à la bague intérieure facilitant un autocentrage du manchon par rapport à une bague de synchronisateur, le capteur de pression annulaire étant compris entre la bague de synchronisateur et le piston.

L'invention, ses caractéristiques et ses avantages apparaîtront plus clairement à la lecture de la description faite en référence aux figures référencées ci-dessous :
- la figure 1 représente un embrayage hydraulique, selon l'invention, dont la bague extérieure d'un roulement est solidaire en rotation des becs de diaphragme;
- la figure 2 représente un embrayage hydraulique selon l'invention, commandé par un distributeur hydraulique, piloté par un calculateur de boîte de vitesse;
- La figure 3 représente un embrayage hydraulique selon l'invention ;
- La figure 4 représente un embrayage mécanique selon l'invention, commandé par un actionneur mécanique, piloté par un calculateur de boîte de vitesse;
- La figure 5 représente une vue en coupe du mécanisme de la figure 1 dans lequel est inséré un capteur de pression annulaire ;
- La figure 6 représente un type de capteur de position comprenant deux bobines enroulés autour d'un noyau ferreux associé à un aimant et à un boîtier de mesure et d'alimentation ;

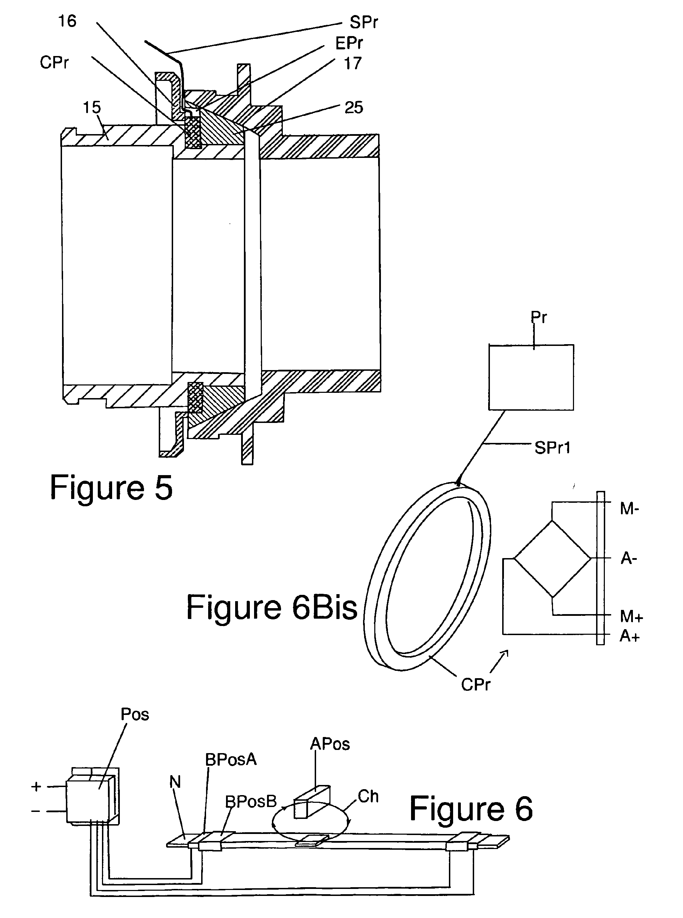

- La figure 6bis représente un type de capteur de pression ;

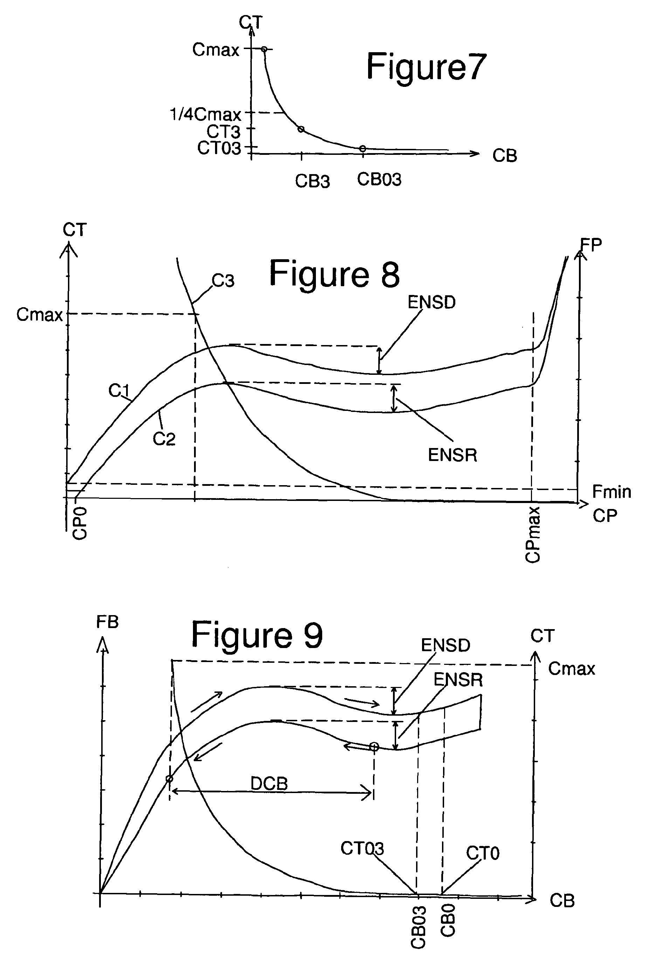

- La figure 7 est une courbe représentant le couple transmissible par un embrayage en fonction de la course de butée d'embrayage ;
- La figure 8 comprend une première courbe représentant le couple transmissible par un embrayage en fonction de la course de la pédale d'embrayage et une deuxième et une troisième courbe représentant l'effort d'embrayage et respectivement de débrayage en fonction de la course de la pédale d'embrayage ;
- La figure 9 est une courbe double représentant l'effort de butée d'embrayage en fonction de la course de butée d'embrayage pour un embrayage et pour un débrayage.

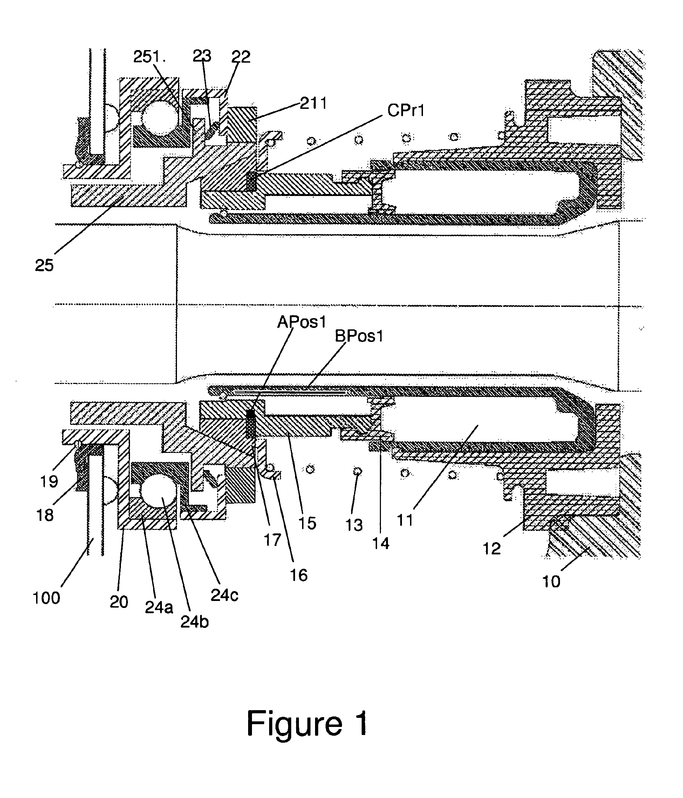

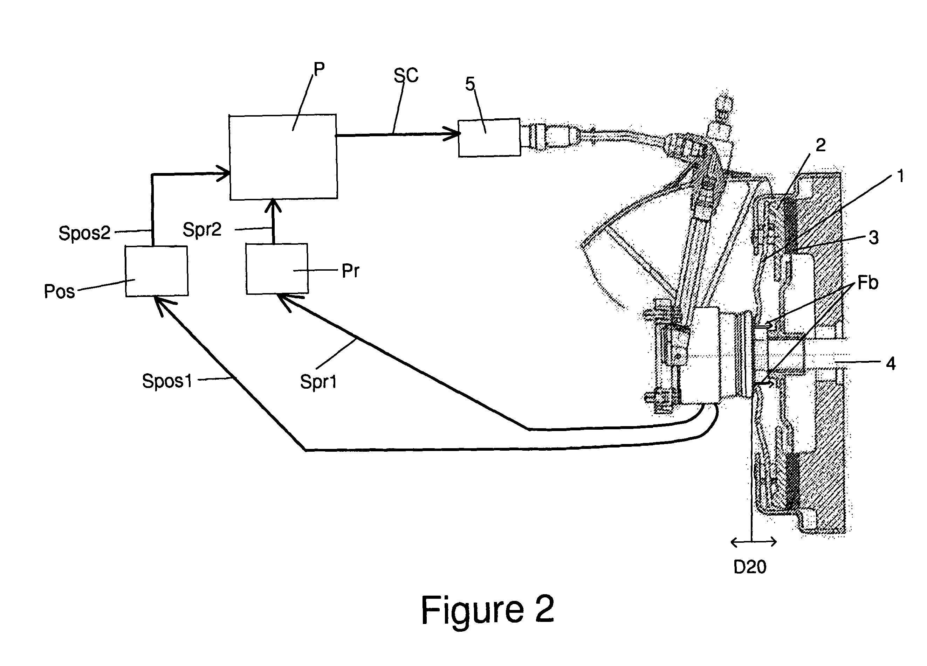

L'invention va à présent être décrite en référence aux figures 1 à 9. Le système d'embrayage, comme représenté à la figure 2, comprend un plateau (2) d'embrayage appuyant sur un disque (3) d'embrayage. Un ressort diaphragme (1) d'embrayage exerce ou non une force sur le plateau (2) afin que celui-ci appuie ou non sur le disque (3) d'embrayage. Un dispositif de commande agît sur le ressort diaphragme (1) d'embrayage par une poussée. L'effort (Fb) d'embrayage est exercé par la butée (20) d'embrayage sur les becs (100) de diaphragme (1). La butée (20) d'embrayage à une course (D20) allant d'une position minimum déterminée embrayée à une position maximum déterminée débrayée. De manière non limitative l'embrayage est actionné par un dispositif hydraulique, par exemple un piston (15) associé à une chambre (11) hydraulique. L'organe de commande de l'embrayage est, de manière non limitative, un distributeur (5) qui fournit une pression hydraulique de commande à l'embrayage. Le distributeur (5) hydraulique est en communication par une liaison (SC) électrique avec un calculateur (P) de boîte de vitesses ou avec un autre organe de calcul comme par exemple un calculateur de moteur. Le calculateur (P) de boîte de vitesse envoi un signal électrique de commande au distributeur (5) hydraulique. Lorsque le distributeur (5) fournit une pression maximale déterminée, l'embrayage est en position débrayée et l'arbre (4) primaire n'est plus entraîné par le moteur. Lorsque le distributeur (5) ne fournit plus de pression, l'embrayage est dans une position embrayée et est entièrement couplé avec l'arbre (4) primaire.

D'autre part, dans le cas d'une boîte de vitesse robotisée, également appelée BVR, le calculateur (P) de boîte de vitesse comprend, de manière connue, une liaison électrique avec un dispositif de sélection des rapports de vitesses, non représentés. De façon connue, le calculateur (P) de boîte de vitesse est aussi en liaison avec un calculateur de moteur qui commande les cycles de combustion du moteur. Le calculateur (P) de boîte pilote aussi un dispositif de sélection des rapports de vitesse, de façon connue, en fonction de plusieurs éléments de calcul comme par exemple, la mesure de la course de la pédale d'accélération et/ou de la pédale de frein, la position mesurée du levier de vitesses et le mode de conduite sélectionné, la mesure de la vitesse de rotation du moteur, la mesure de la vitesse de rotation de la boîte de vitesse, la mesure de la vitesse du véhicule, la mesure du couple moteur ou la mesure de la température du moteur.

De plus, selon l'invention, le calculateur (P) de boîte de vitesse ou un autre organe de pilotage de l'embrayage, est relié par une liaison (SPr1, SPr2) électrique avec un capteur (CPr) de pression situé dans l'embrayage, de manière non limitative via un boîtier (Pr) électronique associé transformant le signal analogique image de la pression subie, produit par le capteur (Cpr), en une information numérique utilisable par le calculateur (P) de boîte de vitesse. Le calculateur (5) de boîte de vitesse est aussi relié par une liaison (Spos1, Spos2) électrique avec un capteur (Apos, Bpos) de position, de manière non limitative, via un boîtier (Pos) associé transformant les signaux analogiques images de la position en une information numérique utilisable par le calculateur (P).

Un dispositif hydraulique concentrique de commande d'embrayage est décrit dans la demande de brevet FR0414052 et est représenté à la figure 1 avec une modification selon l'invention. Le dispositif d'embrayage hydraulique concentrique est composé d'une première partie comprenant un piston (15) sur laquelle est montée à son extrémité une bague (17) de synchronisateur de piston de forme tronconique en appui contre le capteur (CPr1) de pression. Un aménagement (EPr), comme représenté sur le détail de la figure 5, est prévu dans le synchronisateur (17) de piston, afin de faire passer une liaison (SPr1) électrique avec le capteur de pression. D'autre part, le capteur de pression est en appui contre le piston (15). Le piston (15) est actionné dans un déplacement axial par la chambre hydraulique (11) dans laquelle le piston (15) coulisse. Un joint (14) assurant l'étanchéité de la chambre hydraulique (11) est disposé sur l'extrémité du piston (15) opposée à la bague (17) et s'insère dans la chambre hydraulique (11). Ainsi, lorsque le fluide est injecté dans la chambre hydraulique (11) le piston (15) pousse sur un manchon synchronisateur (25). Le piston (15) est fixe en rotation comme la chambre hydraulique (11), et monté solidairement du corps récepteur hydraulique (12) et d'un carter (10) d'embrayage. Le contenant annulaire formant les parois de la chambre hydraulique (11) est maintenu par ses parois externes sur le corps de récepteur hydraulique (12) lequel est lui-même rendu solidaire du carter (10) d'embrayage, par exemple par vissage. Un capteur de position constitué de deux bobines d'induction enroulées autour d'un noyau ferreux, comme représentés à la figure 6, sont intégrés au tube de guidage du piston (15), le tube de guidage prolongeant le contenant de la chambre hydraulique et étant coaxial à l'arbre (4) primaire. Des liaisons électriques avec les bobines non représentées sur la figure 1, sont réalisées et passent par un aménagement dans le tube de guidage du piston (15).

Dans une variante de réalisation, non représentée, deux bobines d'induction sont comprises dans le piston (15) et le tube de guidage du piston comprend un aimant annulaire de positionnement. Ce type de montage est connu de l'art antérieur permet aussi un positionnement de l'aimant par rapport aux bobines d'induction.

Un ressort de précharge (13) est maintenu par une de ses extrémités au moyen d'un socle de guidage (16) du ressort de précharge et par son autre extrémité contre un épaulement du corps de récepteur hydraulique (12). Le ressort de précharge (13) exerce une force en permanence sur le piston (15), qui le pousse vers le manchon (25) synchronisateur. Le ressort (13) de précharge s'appuie par sa première extrémité sur un socle (16) de guidage et par sa deuxième extrémité sur un épaulement du corps (12) de récepteur hydraulique. Le ressort de précharge exerce une force servant à maintenir le dispositif de commande hydraulique de l'embrayage en place, lorsque la commande de débrayage n'est pas exercée. Lors du débrayage, le fluide de commande augmente le volume de la chambre hydraulique (11) en poussant le piston (15) qui comporte à son extrémité le capteur (CPr1) de pression et la bague (17) de synchronisateur de piston. La bague de synchronisateur de piston vient alors se centrer et s'accoupler selon l'invention sur le manchon synchronisateur (25) porté par les becs.

Le dispositif d'embrayage hydraulique concentrique est composé d'une deuxième partie liée aux becs (100) comprenant un manchon synchronisateur (25) auquel vient s'accoupler la bague (17) de synchronisateur de piston. Le manchon synchronisateur (25) est monté solidaire en rotation de la bague intérieure (24c) d'un roulement (24a, 24b, 24c) et de façon à pouvoir s'autocentrer par rapport à la bague (17) de synchronisateur de piston. La bague intérieure (24c) comporte un prolongement radial et axial par rapport à l'axe du roulement (24a, 24b, 24c) formant un épaulement permettant de monter et maintenir par serrage, clipssage ou serrage un capot de maintien (22) sur la bague intérieure (24c) du roulement (24a, 24b, 24c). Le manchon synchronisateur (25) comporte un collet (251) permettant son maintien dans son logement annulaire formé par le capot (22) et le prolongement radial et axial de la bague intérieure (24c). Une rondelle (23) élastique d'autocentrage est disposée entre le capot de maintien (22) et l'épaulement formé par le collet (251) du manchon synchronisateur (25) pour permettre d'autocentrer le manchon synchronisateur (25) par rapport à la bague (17) de synchronisateur de piston. La bague extérieure de roulement (24a) est solidarisée aux becs de diaphragmes de la façon suivante. Une bague (20) d'appui liée à la bague extérieure (24a) du roulement (24a, 24b, 24c), comporte un prolongement radial et axial par rapport à la bague extérieure (24a) du roulement. Les becs de diaphragmes (100) sont maintenus solidairement en rotation, contre la partie radiale de la bague d'appui (20), au moyen d'une rondelle de précharge (18). La rondelle de précharge (18) est maintenue en appui, contre les becs (100) de diaphragme, au moyen d'un clip (19). Les becs (100) de diaphragmes, la bague d'appui (20) et la bague (24a) extérieure du roulement sont donc solidaires en rotation. Dans le montage figure 1, la vitesse différentielle entre les becs de diaphragmes et la butée d'embrayage est nulle car les becs de diaphragmes (1) sont maintenus solidairement en rotation sur la bague d'appui (20) liée à la bague (24a) extérieure du roulement (24a, 24b, 24c), dont la bague interne (24c) est maintenue fixe en rotation par rapport à la bague (17) de synchronisateur de piston. La perturbation acoustique connue sous le nom de « crissement de butée » est donc supprimée.

D'une part le dispositif décrit dans la demande de brevet FR0414052 permet de réduire le phénomène de crissement de butée. En le combinant au dispositif selon la présente invention, comme représenté figure 1, la commande de l'embrayage de façon automatique est plus précise.

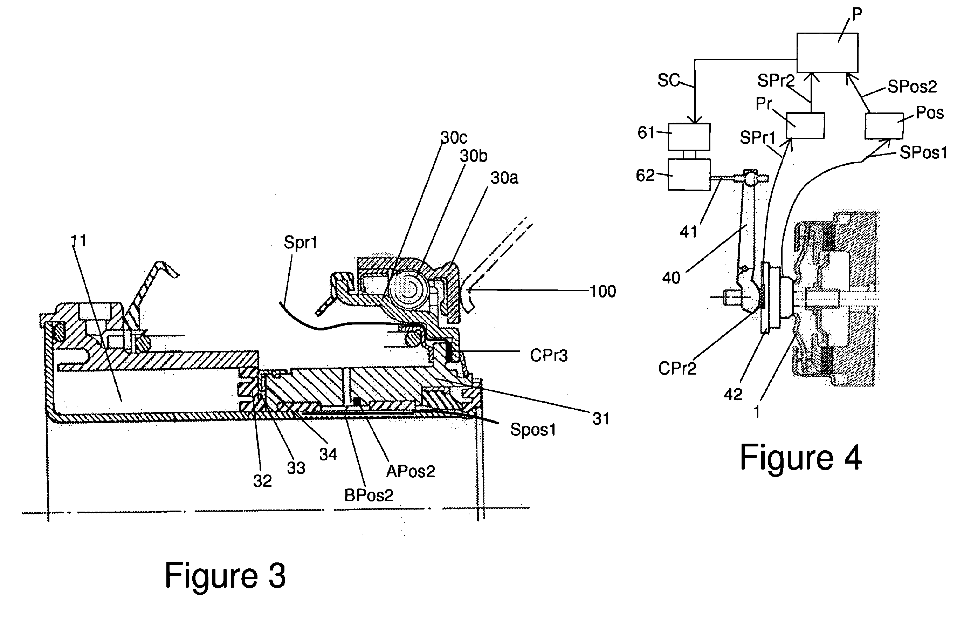

Comme représentés aux figures 3 et 4, d'autres modes de réalisation sont possibles. La figure 3 représente un dispositif connu modifié selon le procédé de l'invention. Le dispositif, figure 3, comprend un mécanisme d'embrayage hydraulique comprenant une chambre sous pression (11). L'expansion du liquide à l'intérieur de la chambre (11) provoque le déplacement du joint (32). Le joint (32) est en appui radial par l'intermédiaire d'un capot (33) et d'une rondelle (34), sur un piston (31) et lui transmet le mouvement. Le piston (31) exerce une poussée sur un capteur (CPr3) par un appui sur une surface radiale. Le capteur (CPr3) monté sur une partie fixe est relié à plusieurs fils électriques afin de produire un signal électrique image de la pression subie. Le capteur transmet un mouvement à la bague (30c) intérieure d'un roulement par un appui radial. Le mouvement est ensuite transmis aux becs (100) de diaphragme par un contact entre la bague (30a) extérieure du roulement et les becs (100) de diaphragme. Dans ce mécanisme de commande hydraulique, le roulement n'est pas lié aux becs (100) de diaphragme. Le capteur produit un signal électrique image de l'effort d'embrayage. Un capteur (BPos2, APos2) de position est composé d'une ou plusieurs bobines (BPos2) d'induction et d'un aimant (APos2). L'aimant (APos2) est par exemple intégré au piston et deux bobines (BPos2) entourées autour d'un noyau ferreux sont intégrés au tube de guidage du cylindre. Une liaison électrique (SPos1) passe dans le tube de guidage du cylindre.

Un exemple non limitatif de dispositif mécanique est donné à la figure 4. Dans cet exemple, un câble actionne une fourchette(40) qui est l'élément moteur du mécanisme de commande de l'embrayage. La fourchette(40) est en appui sur un capteur de pression (CPr2) qui est logé dans une butée (42). Le capteur est relié par une liaison (SPr1) électrique à un boîtier (Pr) associé afin de transmettre un signal électrique image de la pression subie. La butée de l'embrayage est en appui sur les becs de diaphragme (1). Lorsque la fourchette (40) exerce une poussée sur la capteur (CPr2), le capteur (CPr2) fourni un signal électrique image de la pression et transmet le mouvement à la butée (42). La butée (42) exerce une poussée sur les becs du diaphragme (1) qui provoque ensuite le débrayage. Le calculateur (5) de boîte de vitesse envoie un signal électrique de commande, par une liaison (SC) électrique, au dispositif (61, 62) de commande de l'embrayage. Le dispositif de commande de l'embrayage est, par exemple composé d'un premier module (61) qui transforme l'information numérique de commande provenant du calculateur (P), en un signal électrique analogique de puissance. Le signal analogique de puissance commande un deuxième module (62) mécanique constitué par exemple d'un moteur commandé par le signal électrique de puissance, et d'un dispositif de conversion d'un mouvement de rotation du moteur en un mouvement de translation transmis au câble (41) d'activation de l'embrayage.

Le capteur (Cpr) de pression est, par exemple, un capteur de type piézoélectrique de forme annulaire, comme représenté à la figure 6Bis. Ce type ce capteur piézoélectrique comporte, par exemple, deux fils (A+, A) d'alimentation et deux fils (M+, M-) de mesure, les fils étant connectés à un boîtier (Pr) associé. Par exemple, la tension mesurée entre les deux fils donne une image de la pression subie par le capteur (Cpr) de pression. Le module (Pr) électrique associé au capteur de pression transforme le signal électrique analogique image de la pression subie par le capteur, en une information numérique transmise, par exemple au calculateur de boîte de vitesse.

La figure 6 représente un exemple de capteur (BPosA, BPosB, APos) de position. Le capteur de position est par exemple un capteur de type PLCD comprenant deux bobines alimentées par un générateur et enroulées en sens inverse autour d'un noyau (N) ferreux. Un aimant (APos) situé au dessus des bobines (BPosA, BPosB) et se déplaçant le long des bobines (BPosA, BPosB) crée un champ (Ch) magnétique perturbateur du champ dans les bobines (BPosA, BPosB). Ces perturbations sont interprétées, au niveau des mesures des signaux électriques aux bornes des bobines, par le boîtier (Pos) associé aux bobines. Le ou les signaux analogiques électriques images de la position relative de l'aimant (APos) par rapport aux bobines (BPosA, BPosB), est transformé par le module associé, en un signal numérique image de la position relative par rapport à une position de référence déterminée et est transmis par exemple au calculateur de boîte de vitesses.

Le principe de fonctionnement de l'invention va maintenant être décrit. La figure 7 représente le couple (CT) transmissible par l'embrayage en fonction de la course (CB) de la butée d'embrayage. Le couple maximal (CMax) transmissible par l'embrayage, également appelé tarage de l'embrayage, dépend du type d'embrayage et du moteur associé. Plus la course de butée est faible, plus le couple transmissible est important. La loi donnant le couple transmissible en fonction de la course de la butée d'embrayage n'est pas linéaire et comporte plusieurs points de fonctionnement servant de repère. Un repère est par exemple la course (CB3) de butée correspondant au couple (CT3) transmissible de 3Nm qui correspond au point de réembrayage. La course de butée (CB03) correspondant à un couple (CT03) transmissible de 0.3Nm correspond au point de débrayage. Un autre paramètre important connu, est le suivi du coefficient de la courbe pour son parcours aller, du couple maximum transmissible (Cmax) à 1/4 de ce couple maximum transmissible.

La figure 8 représente trois courbes dans un système actionné par un utilisateur. Une première courbe (C1) représente l'effort (FP) exercé au niveau de la pédale en fonction de la course (CP) de la pédale, pour un mouvement aller. Une deuxième courbe (C2) représente l'effort (FP) exercé au niveau de la pédale en fonction de la course (CP) de la pédale, pour un mouvement retour. Une troisième courbe (C3) représente le couple (CT) transmissible en fonction de la course (CP) de la pédale. Les différents points de fonctionnement compris dans ces courbes sont connus, de sorte qu'un dispositif (P, 5) de commande automatique de l'embrayage reproduit la force (FP) exercée sur la pédale en fonction de la course (CP) de la pédale afin de commander le couple (CT) transmissible. Cependant les lois d'application de l'effort (FP) de commande d'embrayage sont redues complexes en raison de l'élément transmetteur qui est l'embrayage et qui a ses propres caractéristiques. Par exemple, un effort (Fmin) d'attaque, ayant une valeur déterminée est nécessaire pour pouvoir actionner l'embrayage. Une partie de l'effort transmis à l'embrayage est donc perdue selon le rendement de l'embrayage. D'autre part, un embrayage commandé dans un embrayage actionné par un dispositif hydraulique, implique une perte de charge dans le circuit hydraulique. Les pertes de charge sont dues par exemple, lors d'une expansion de la chambre (11) hydraulique, à la déformation de la chambre hydraulique avant le déplacement du cylindre (15). Le décalage entre la force (FP) appliquée par un utilisateur ou par un dispositif de commande et la force appliquée par la butée (20) d'embrayage est dû aussi au ressort (13) de précharge qui applique un effort déterminé minimum. La force appliquée par le piston (15) n'est transmise en partie à la butée (20) d'embrayage que lorsque le piston (15) exerce une force supérieure à la force exercée par le ressort (13) de précharge. Le mouvement de réembrayage comprend une course morte (CP0) en fin de réembrayage due aux caractéristiques de l'embrayage.

Un capteur (CPr) de pression est inséré dans l'embrayage, par exemple dans une partie n'étant pas en rotation, entre le dispositif moteur (15) de l'embrayage et la butée (20) d'embrayage. Le capteur (Cpr) de pression situé au plus près de la butée (20) d'embrayage, produit un signal électrique représentatif d'une pression subie. Plus le capteur (CPr) de pression est proche de la butée d'embrayage, dans la chaîne cinématique, plus la pression subie par le capteur est proche de la pression exercée sur la butée (20) d'embrayage, l'effort d'embrayage étant proportionnel à la pression sur la butée (20) d'embrayage. La pression subie par le capteur (CPr) de pression n'est pas dépendante, par exemple, des pertes de charge dans le circuit hydraulique de commande, ou des pertes due au rendement des éléments en amont du capteur (CPr) dans la chaîne cinématique. Les informations de pressions contenues dans les signaux électriques produit par le capteur (CPr) sont donc plus précises. D'autre part, ces informations comparées avec une force appliquée pour commander l'embrayage donnent le rendement de la chaîne cinématique de l'embrayage en amont du capteur (CPr) de pression. La dégradation du rendement témoigne, par exemple, de l'état d'usure de l'embrayage.

Le deuxième capteur constitué d'un aimant (APos) et d'un ensemble d'une ou plusieurs bobines (BPosA, BPosB) permet de calculer la position de l'aimant (APos) par rapport aux bobines (BPosA, BPosB). L'aimant (APos) est, par exemple, collé au capteur (CPr) de pression. Plus l'aimant (APos) est proche de la butée (20) d'embrayage et plus l'information contenue dans le signal électrique produit par le capteur (APos, BPosA, BPosB) de position est précise pour calculer la position de la butée (20) d'embrayage. Les variations de la position de la butée (20) d'embrayage sont calculées après avoir initialisé le système dans une position donnée.

La combinaison des informations fournies par les signaux électriques produits par le capteur (CPr) de pression et des informations fournies par les signaux électriques produits par le capteur (APos, BposA, BPosB) de position donne l'ensemble de points de fonctionnement représentés à la courbe 9, représentant l'effort de la butée de diaphragme en fonction de la course de la butée de diaphragme. La figure 9 comprend également la courbe représentant le couple transmissible en fonction de la course de butée. Cet ensemble de points de fonctionnement permet à un dispositif de commande d'un embrayage d'asservir le couple transmissible par l'embrayage avec une plus grande précision, sans tenir compte des défauts ou des caractéristiques de l'embrayage lui-même. Par exemple, le calculateur (P) prend repère l'ensellement (ENSD) au débrayage et l'ensellement (ENSR) au réembrayage. La valeur de l'ensellement correspondant à la flèche entre l'effort d'embrayage maximal et le minimum local de l'effort d'embrayage. Le calculateur prend en compte la course (DCB) de dosabilité d'embrayage entre le point de réembrayage et le point de transmission du couple (Cmax) maximum. Dans le mouvement de débrayage le calculateur prend en compte la position de la course de butée pour déterminer les points de débrayage (CB03) et de libération (CB0). Les paramètres pris en compte permettent au calculateur (P) de boîte de vitesses de piloter le ou les organes de commande de l'embrayage.

Les capteurs de mesure de l'effort de butée et de mesure de la position sont aussi adaptables, de manière non limitative, sur d'autres embrayages, du type par exemple à rattrapage d'usure ou du type à double volant amortisseur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Embrayage transmettant un couple d'un arbre moteur à un arbre (4) primaire, commandé automatiquement par un dispositif (5) de commande piloté par un dispositif (P) de calcul, l'embrayage comportant un diaphragme (1) dont les becs (100) de diaphragme sont en appui sur une butée (20) d'embrayage, un organe (15) moteur étant actionné par une énergie hydraulique ou mécanique délivrée par le dispositif (5) de commande en fonction d'un signal provenant du dispositif (P) de calcul, pour exercer une poussée à transmettre à la butée (20) d'embrayage, **caractérisé en ce qu'**il comporte des moyens de mesure d'une pression comprenant au moins un capteur de pression disposé entre l'organe (15) moteur et la butée (20) d'embrayage, le capteur (CPr1) de pression étant pressé entre l'organe (15) moteur et la butée (20) d'embrayage pour que l'organe moteur transmette la poussée à la butée (20) par l'intermédiaire du capteur de pression, un signal image de la pression mesurée étant transmis au dispositif (P) de calcul, par des premiers moyens de communication (SPr1, SPr2, Pr).

2. Embrayage selon la revendication 1, **caractérisé en ce que** l'embrayage comprend des moyens (Pos) de mesure de la position relative d'au moins un premier indicateur (APos1, respectivement BPos1) de position solidaire de l'organe (15) moteur par rapport à au moins un deuxième indicateur (BPos1, respectivement APos1) de position fixe en translation par rapport à l'arbre (4) primaire, les moyens de mesure de la position relative transmettant, via des seconds moyens (Pos) de communication, un signal image de la position relative au dispositif (P) de calcul.

3. Embrayage selon la revendication 2, **caractérisé en ce que** le capteur de pression est un capteur (CPr1) de pression annulaire.

4. Embrayage selon la revendication 3, **caractérisé en ce que** le capteur de pression est de type piézoélectrique et est en liaison avec un premier boîtier d'alimentation et de mesure transformant un signal électrique analogique image de la pression produit par le capteur piézoélectrique en le signal transmis au dispositif de calcul, sous forme numérique.

5. Embrayage selon l'une des revendications 2 à 4, **caractérisé en ce que** ledit premier indicateur (APos1) de position est un aimant et ledit deuxième indicateur (BPos1) de position est une bobine placée en vis-à-vis de l'aimant reliée aux moyens (Pos) de mesure de la position relative par une liaison (SPos1) électrique les moyens de mesure de la position relative comprenant un deuxième boîtier (Pos) d'alimentation et de mesure transmettant le signal image de la position relative au dispositif (P) de calcul, sous forme numérique.

6. Embrayage selon la revendication 5, **caractérisé en ce que** l'organe moteur (15) étant un piston hydraulique, l'aimant (APos1) est situé dans la partie mobile du piston et deux bobines (BPosA, BPosB) d'induction sont enroulées autour d'un noyau (N) ferreux, les deux bobines et le noyau ferreux étant insérés ou noyés dans un tube de support du piston.

7. Embrayage selon l'une des revendications 2 à 4, **caractérisé en ce que** ledit deuxième indicateur de position est un aimant (APos1) et ledit premier indicateur de position est une bobine (BPos1) placée en vis-à-vis de l'aimant reliée aux moyens de mesure de la position relative par une liaison (SPos1) électrique les moyens de mesure de la position relative comprenant un deuxième boîtier (Pos) d'alimentation et de mesure transmettant le signal image de la position relative au dispositif (P) de calcul, sous forme numérique.

8. Embrayage selon la revendication 7, **caractérisé en ce que** l'organe moteur étant un piston annulaire hydraulique coulissant sur un tube, l'aimant est situé dans le tube de support du piston (15), ladite bobine étant comprise dans la partie annulaire du piston.

9. Embrayage selon la revendication 6 ou 8, **caractérisé en ce qu'**une partie du dispositif de commande comprend un roulement (24a, 24b, 24c) solidaire par sa bague (24a) extérieure de la butée (20) d'embrayage rendue solidaire des becs (100) de diaphragme, la bague (24c) intérieure du roulement étant solidaire en rotation d'un manchon (25) synchronisateur coaxial à l'arbre primaire du moteur, le manchon (25) étant monté sur la bague (24c) intérieure par des moyens (22, 23, 24c) permettant un déplacement radial relatif du manchon par rapport à la bague intérieure facilitant un autocentrage du manchon par rapport à une bague (17) de synchronisateur, le capteur de pression annulaire étant compris entre la bague (17) de synchronisateur et le piston (15).

## Claims

1. Clutch transmitting a torque from a driveshaft to a primary shaft (4), controlled automatically by a control device (5) driven by a calculation device (P), the clutch comprising a diaphragm (1) the diaphragm fingers (100) of which bear against a clutch release bearing (20), a drive member (15) being actuated by hydraulic or mechanical energy delivered by the control device (5) on the basis of a signal from the calculation device (P) in order to apply a thrust to be transmitted to the clutch release bearing (20), **characterized in that** it comprises means of measuring a pressure comprising at least one pressure sensor positioned between the drive member (15) and the clutch release bearing (20), the pressure sensor (CPr1) being pressed between the drive member (15) and the clutch release bearing (20) so that the drive member transmits the thrust to the bearing (20) via the pressure sensor, a signal that reflects the measured pressure being transmitted to the calculation device (P) by a first communication means (SPr1, SPr2, Pr).

2. Clutch according to Claim 1, **characterized in that** the clutch comprises means (Pos) of measuring the relative position of at least a first position indicator (APos1, BPos1, respectively) secured to the drive member (15) with respect to at least one second position indicator (BPos1, APos1, respectively) that is fixed in terms of translational movement with respect to the primary shaft (4), the means of measuring the relative position transmitting to the calculation device (P), via a second communication means (Pos), a signal that reflects the relative position.

3. Clutch according to Claim 2, **characterized in that** the pressure sensor is an annular pressure sensor (CPr1).

4. Clutch according to Claim 3, **characterized in that** the pressure sensor is of the piezoelectric type and is connected with a first power and measurement unit that converts an analogue electrical signal that reflects the pressure produced by the piezoelectric sensor into the signal transmitted in digital form to the calculation device.

5. Clutch according to one of Claims 2 to 4,
**characterized in that** the said first position indicator (APos1) is a magnet and the said second position indicator (BPos1) is a coil positioned facing the magnet and connected to the relative-position measurement means (Pos) by an electrical connection (SPos1), the relative-position measuring means comprising a second power and measurement unit (Pos) transmitting to the calculation device (P), in digital form, the signal that reflects the relative position.

6. Clutch according to Claim 5, **characterized in that** with the drive member (15) being a hydraulic piston, the magnet (APos1) is situated in the moving part of the piston and two induction coils (BPosA, BPosB) are wound around a ferrous core (N), the two coils and the ferrous core being inserted or embedded in a piston support tube.

7. Clutch according to one of Claims 2 to 4,
**characterized in that** the said second position indicator is a magnet (APos1) and the said first position indicator is a coil (BPos1) positioned facing the magnet and connected to the relative-position measurement means by an electrical connection (SPos1), the relative-position measurement means comprising a second power and measurement unit (Pos) transmitting to the calculation device (P), in digital form, the signal that reflects the relative position.

8. Clutch according to Claim 7, **characterized in that** with the drive member being a hydraulic annular piston sliding on a tube, the magnet is situated in the piston (15) support tube, the said coil being contained within the annular part of the piston.

9. Clutch according to Claim 6 or 8, **characterized in that** part of the control device comprises a rolling bearing (24a, 24b, 24c) secured by its outer ring (24a) to the clutch release bearing (20) rendered integral with the diaphragm fingers (100), the inner ring (24c) of the rolling bearing rotating as one with a synchronizing sleeve (25) coaxial with the primary shaft of the engine, the sleeve (25) being mounted on the inner ring (24c) via means (22, 23, 24c) that allow a relative radial movement of the sleeve with respect to the inner ring making it easier for the sleeve to self-align with a ring (17) of the synchronizer, the annular pressure sensor being contained between the synchronizing ring (17) and the piston (15).

## Patentansprüche

1. Kupplung, die ein Drehmoment von einer Antriebswelle an eine Primärwelle (4) überträgt, automatisch gesteuert von einer von einer Rechenvorrichtung (P) gelenkten Steuervorrichtung (5), wobei die Kupplung eine Membran (1) aufweist, deren Membranlippen (100) auf einem Kupplungsanschlag (20) in Auflage sind, wobei ein Antriebsorgan (15) durch eine hydraulische oder mechanische Energie betätigt wird, die von der Steuervorrichtung (5) in Abhängigkeit von einem von der Rechenvorrichtung (P) kommenden Signal geliefert wird, um einen auf den Kupplungsanschlag (20) zu übertragenden Schub auszuüben, **dadurch gekennzeichnet, dass** sie Einrichtungen zur Messung eines Drucks aufweist, die mindestens einen Drucksensor enthalten, der zwischen dem Antriebsorgan (15) und dem Kupplungsanschlag (20) angeordnet ist, wobei der Drucksensor (CPr1) zwischen das Antriebsorgan (15) und den Kupplungsanschlag (20) gedrückt wird, damit das Antriebsorgan den Schub über den Drucksensor auf den Anschlag (20) überträgt, wobei ein den gemessenen Druck abbildendes Signal von ersten Kommunikationseinrichtungen (SPr1, SPr2, Pr) an die Rechenvorrichtung (P) übertragen wird.

2. Kupplung nach Anspruch 1, **dadurch gekennzeichnet, dass** die Kupplung Einrichtungen (Pos) zur Messung der relativen Position mindestens eines ersten, fest mit dem Antriebsorgan (15) verbundenen Positionsanzeigers (APos1 bzw. BPos1) bezüglich mindestens eines zweiten, bezüglich der Primärwelle (4) translatorisch festen Positionsanzeigers (BPos1, bzw. APos1) enthält, wobei die Einrichtungen zur Messung der relativen Position über zweite Kommunikationseinrichtungen (Pos) ein die relative Position abbildendes Signal an die Rechenvorrichtung (P) übertragen.

3. Kupplung nach Anspruch 2, **dadurch gekennzeichnet, dass** der Drucksensor ein ringförmiger Drucksensor (CPr1) ist.

4. Kupplung nach Anspruch 3, **dadurch gekennzeichnet, dass** der Drucksensor vom piezoelektrischen Typ ist und mit einem ersten Versorgungs- und Messgehäuse in Verbindung steht, das ein den vom piezoelektrischen Sensor erzeugten Druck abbildendes elektrisches Analogsignal in das an die Rechenvorrichtung in digitaler Form übertragene Signal umwandelt.

5. Kupplung nach einem der Ansprüche 2 bis 4, **dadurch gekennzeichnet, dass** der erste Positionsanzeiger (APos1) ein Magnet und der zweite Positionsanzeiger (BPos1) eine gegenüber dem Magnet angeordnete Spule ist, die mit den Einrichtungen (Pos) zur Messung der relativen Position über eine elektrische Verbindung (SPos1) verbunden ist, wobei die Einrichtungen zur Messung der relativen Position ein zweites Versorgungsund Messgehäuse (Pos) enthalten, das das die relative Position abbildende Signal in digitaler Form an die Rechenvorrichtung (P) überträgt.

6. Kupplung nach Anspruch 5, **dadurch gekennzeichnet, dass**, wenn das Antriebsorgan (15) ein Hydraulikkolben ist, der Magnet (APos1) sich in dem beweglichen Bereich des Kolbens befindet und zwei Induktionsspulen (BPosA, BPosB) um einen Eisenkern (N) gewickelt sind, wobei die zwei Spulen und der Eisenkern in ein Tragrohr des Kolbens eingeführt oder eingebettet sind.

7. Kupplung nach einem der Ansprüche 2 bis 4, **dadurch gekennzeichnet, dass** der zweite Positionsanzeiger ein Magnet (APos1) und der erste Positionsanzeiger eine gegenüber dem Magnet angeordnete Spule (BPos1) ist, die mit den Einrichtungen zur Messung der relativen Position über eine elektrische Verbindung (SPos1) verbunden ist, wobei die Einrichtungen zur Messung der relativen Position ein zweites Versorgungs- und Messgehäuse (Pos) enthalten, das das die relative Position abbildende Signal in digitaler Form an die Rechenvorrichtung (P) überträgt.

8. Kupplung nach Anspruch 7, **dadurch gekennzeichnet, dass**, wenn das Antriebsorgan ein auf einem Rohr gleitender, ringförmiger Hydraulikkolben ist, der Magnet sich in dem Tragrohr des Kolbens (15) befindet, wobei die Spule im ringförmigen Bereich des Kolbens enthalten ist.

9. Kupplung nach Anspruch 6 oder 8, **dadurch gekennzeichnet, dass** ein Teil der Steuervorrichtung ein Lager (24a, 24b, 24c) enthält, das über seinen äußeren Ring (24a) fest mit dem Kupplungsanschlag (20) verbunden ist, der mit den Membranlippen (100) fest verbunden wird, während der innere Ring (24c) des Lagers in Drehung fest mit einer Synchronisiermuffe (25) koaxial zur Primärwelle des Motors verbunden ist, wobei die Muffe (25) auf den inneren Ring (24c) durch Einrichtungen (22, 23, 24c) montiert wird, die eine relative radiale Verschiebung der Muffe bezüglich des inneren Rings erlauben, was eine Selbstzentrierung der Muffe bezüglich eines Synchronisierrings (17) erleichtert, wobei der ringförmige Drucksensor zwischen dem Synchronisierring (17) und dem Kolben (15) enthalten ist.
